# EUROPEAN PATENT SPECIFICATION

(11) **EP 1 555 161 B1**
(45) Date of publication and mention of the grant of the patent: **12.07.2006**
(21) Application number: 04380291.7
(22) Date of filing: 30.12.2004
(51) Int. Cl.: B60R 7/04

(54) **Seat with an object-holding chamber for an automotive vehicle**
Kraftfahrzeugsitz mit Ablagefach
Siége pour véhicule automobile comportant un réceptacle pour ranger un objet

(30) Priority: 16.01.2004 ES 200400084 U
(43) Date of publication of application: 20.07.2005
(73) Proprietor: Seat, S.A., 08040 Barcelona (ES)
(72) Inventor: Alonso Berrar, Alonso, 08760 Martorell Barcelona (ES)
(74) Representative: Carvajal y Urquijo, Isabel

(56) References cited:
- DE-C1- 19 727 131
- FR-A- 2 710 297

## Description

The present invention relates to a seat with an object-holding chamber for an automotive vehicle, the seat of which has fastened beneath it an object-holding chamber or coffer with a front access door.

More specifically, the invention is aimed at one of the front seats of an automotive vehicle, the driver or the passenger seat, of the type provided in the lower part with a trim panel covering the front and at least partially the sides and the front length of which is interrupted in its central portion in a portion occupied by the object-holding chamber.

The object-holding chamber or coffer is mounted beneath the driver or passenger seat and fastened thereto by means of screws which are joined to its base. The vehicle models wherein said chamber is introduced are additionally provided in their front seats with panels, which are elements of plastic material surrounding the lower base of the seats at least on the front and sides, hiding the guides and the structure thereof, thereby allowing a great aesthetic integrity of the seat on the inside of the vehicle, panels which are also directly fastened to the seat. Therefore, the fact of mounting the chamber and the panel on the base of the seat entails the need for adding an additional joining system between these components ensuring complete solidarity between them, thereby forming a more compact assembly with the seat and being able to control the freedom between them.

To obtain a compact assembly, the joining of the coffer and the trim panel must meet following requirements:
- It must be a fastening allowing no relative movements between the chamber and the panel so as to achieve that both are integral. Due to this and taking one of the components as a reference, it has to achieve blocking of the six degrees of freedom that a three-dimensional member has in a spatial configuration.
- It must be a compact and small-sized joint, given the small space available to place it.
- Its mounting system has to be simple so that said operation may be carried out as efficiently as possible.
- The manufacturing and mounting cost has to be as economical as possible.

To carry out the joining of coffer and panel, traditional fastening members might be used, such as screws, metal rivets, staples, etc. However, they do not meet the needs or requirements set forth above, some by not meeting the specifications asked of the fastening, and others by their introduction being too expensive.

DE 197 27 731 C discloses a seat corresponding to the preamble of claim 1.

The object of the present invention is to solve the problem set forth by means of a fastening system between the object-holding chamber and the panel which is of simple makeup and meets the requirements previously listed.

Thus, the chamber and panel are provided in the crossing or intersection area with surfaces which face each other upon placing said chamber in the definitive mounting position, these surfaces being provided with pre-mounting means including guide members and clamping members. The guide members lead to the chamber or coffer during its mounting operation through the panel to a final mounting position. As regards the clamping members, they ensure the relative final positioning between the coffer and the panel by said coffer reaching the final mounting position.

The aforementioned guide members are made up of projections and grooves or channels, coincident in number and position and located on the faceable surfaces of the chamber and the panel, for example, the projections being able to be located in the coffer and the grooves or channels in the faceable surface of the panel. These projections and grooves lead the penetration of the chamber through the panel.

As regards the clamping members, they are made up of at least one projection and one retaining housing located on the faceable surfaces of the chamber and the panel, in coincident positions upon the chamber reaching its mounting position, such clamping members including retaining means preventing the inadvertent exit or extraction of the chamber once the latter reaches its final mounting position. As in the previous case, the projection may be integral with the chamber or coffer, while the housing is located on the faceable surface of the panel.

As is understandable, both the number of projections and the arrangement thereof may be different from those described.

Furthermore, one of the faceable surfaces of each side, for example, the one corresponding to the coffer, has projecting tabs or lugs on which the faceable surface of the panel rests, partially retracting said tabs due to elastic deformation thereof, which prevents gaps between the coffer and the panel from occurring.

As indicated, the different projections and tabs may be located on the sides of the chamber, being obtained during the injection process thereof. The openings made in the faceable surfaces of the panel, which will be sized to receive the corresponding projections, may be obtained in the same manner.

The described system allows achieving an array of joints with which any relative movement between the coffer and the panel, as a result, for example, of releases or variations of the general inertia of the vehicle, is blocked, and all this with a wide stress margin.

The system proposed by the invention is also specially designed for making the assembly of the whole in an assembly line as simple as possible. The process will consist in making the projections of the chamber coincide in the openings arranged for this purpose in the faceable surfaces of the panel, making a member slide next over another one until the projection forming the clamping member clicks in the housing corresponding to the panel, which may include tabs reproducing a clip effect in spite of all the degrees of freedom of a member being blocked with reference to another, on the other hand, maximum reduction of link redundancy has also been tried, an effect that causes big problems in a mounting process.

Amongst others, the following advantages are obtained with the system of the invention:
- Economic savings with respect to other traditional options, due to the members of the fastening being shaped by means of plastic injection together with the body of the chamber and the panel itself, which does not entail a substantial increase of the cost of its manufacture.
- A great compactness, an important property due to the limitations in available space.
- The efficiency of the fastening due to achieving the complete blocking of any movement between both components.
- Fast and easy mounting, due to the conception and configuration of the fastening members.

All the features and advantages set forth may be better understood with the following description, made with reference to the drawings, wherein a non-limiting embodiment is shown.

In the drawings:
Figure 1 is a front perspective view of an object-holding chamber coupled to the lower panel of a front seat of an automotive vehicle.
Figure 2 is a perspective view of one of the sides of the object-holding chamber according to direction A of figure 1.
Figure 3 is a perspective view of one of the sections of the panel faceable to the chamber, view according to direction B of figure 1.
Figure 4 is a perspective view similar to figure 2, where one of the sides of the chamber is shown coupled on the corresponding faceable surface of the panel.

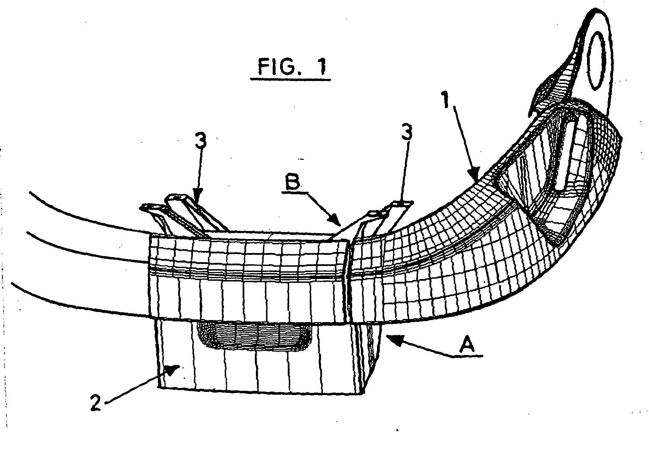

In figure 1, the panel 1 surrounding the front seats of a vehicle in their lower part and laterally and being of use as a trim element for hiding the guides and other elements of the seat, is shown.

Underneath the corresponding seat, not represented in figure 1, an object-holding chamber or coffer is arranged, which is referenced with number 2, which crosses panel 1 through an interrupted central area thereof.

Panel 1 has means for being fastened to the seat, of arrangement and makeup known as such. For its part, the coffer 2 has tabs 3 for anchoring thereof to the structure of the seat. The object of the invention is to develop a system of joining between the coffer 2 and the panel 1, which will be carried out through the faceable surfaces of both components in the crossing area thereof.

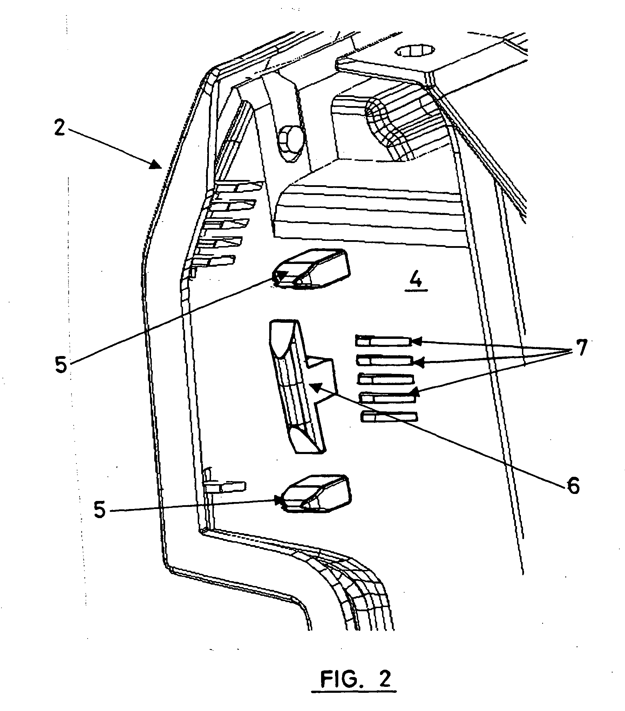

In figure 2, a perspective view of one of the sides of chamber 2, including the surface 4 faceable to the panel, is shown. Two identical projections, referenced with number 5, located at the same height, and an intermediate T-shaped projection 6 project from this surface. All these projections project perpendicularly from surface 4. Furthermore, tabs 7, which can be partially retractable by elastic deformation, slightly project from this surface.

For its part, panel 1 has surfaces faceable to the chamber 2, defined by a flap 8 which abuts with the surfaces 4 of chamber 2 upon coupling said chamber in the panel, as shown in figure 1. This flap 8 has two openings 9 positioned for facing the projections 5 of the chamber upon positioning said chamber for mounting thereof through chamber 1, said openings further being of sufficient length so as to allow reception and sliding of the projections 5 until the chamber 2 reaches its final mounting position, thereby being of use as guide members for leading the chamber during mounting thereof.

The flaps 8 further have a central opening 10 positioned and sized for receiving projection 6 of the chamber when mounting thereof is started. The opening 10 has a central widening 11 limited between elastically deformable lugs 12 ended in facing semi-arrowheads 13, between which the central branch of the T-shaped projection 6 of the chamber passes, elastically spacing the lugs. When the central branch of projection 6 goes beyond the semi-arrowheads 13, the latter elastically recover their position, partially encircling projection 6 and preventing its exit. This circumstance occurs when chamber 2 reaches the final mounting position wherein it is retained by the retention of projection 6 by the lugs 12, as has been set forth.

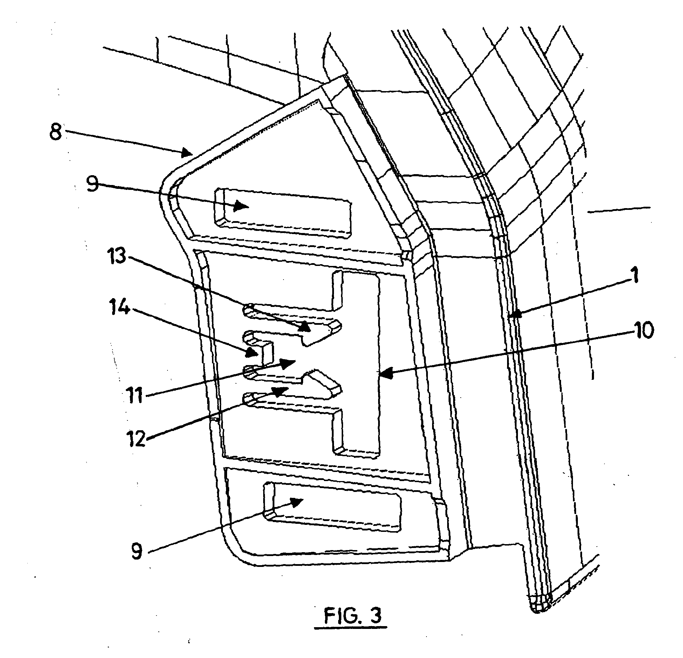

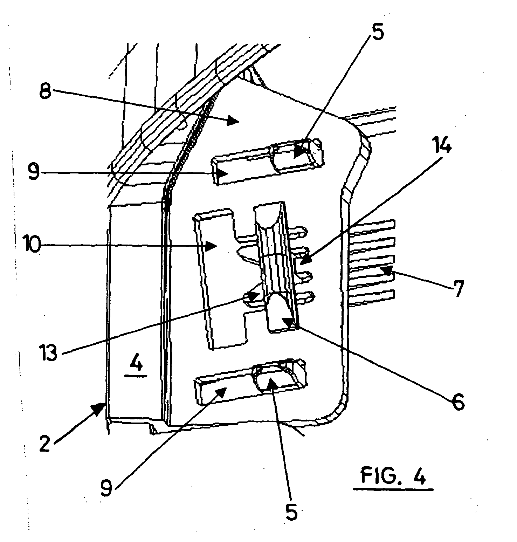

As can be seen in figure 4, the central branch of projection 6 of the chamber is retained by a retaining clip or nipper defined by the semi-arrowheads 13 of lugs 12 and the support 14 projecting from the bottom of housing 11, as can be seen in figure 3. The projections 5 occupy the limit position in the openings 9. Furthermore, the flap 8 on each side of panel 1 rests on the tabs 7, any gap between the chamber or coffer 2 and the panel 1 being thereby eliminated.

With the described makeup, the projections 5 and openings 9 act as guide members during the mounting of chamber 2 through panel 1, while the projection 6 and opening 10 act as clamping members, the tabs 7 being of use as a means for eliminating gaps between the described components.

Easily deducible from figure 4 is the function performed by each guide and clamping member, preventing in the joint both shifts on any spatial axis and possible rotations around said axes, whereupon blocking of all degrees of freedom that a spatial body has is achieved.

## Claims

1. A seat with an object-holding chamber for an automotive vehicle, the seat of which has the object-holding chamber (2) fixed beneath it and has on its lower portion a trim panel (1) which is interrupted in its front portion by the passage of said chamber, said chamber and panel having in the intersection area facing surfaces provided with pre-mounting means including guide members ensuring the relative positioning between both components; the guide members of which are made up of projections (5) and openings or channels (9), coincident in number and position and located on the faceable surfaces of the chamber and panel, so as to lead the penetration of said chamber through the panel **characterized in that** the premounting means include clamping members ensuring the relative positioning between both components, the clamping elements of which are made up of at least one projection (6) and one retaining housing or opening (10) located on the faceable surfaces of the chamber and panel, in coincident positions upon the chamber reaching its final mounting position.

2. A seat according to claim 1, **characterized in that** the guide members consist of two projections (5) located at different heights, projecting to the outside of the faceable surfaces of the walls of the chamber, and of the same number of openings (9) located on the faceable surfaces of the panel, the openings of which run in a direction parallel to that of mounting of the chamber, being located at the same height as the projections of said chamber and are of sufficient length to lead said chamber to the final mounting position.

3. A seat according to claim 1, **characterized in that** the clamping members consist of a T-shaped projection (6), perpendicularly projecting from the faceable outer surfaces of the walls of the chamber, and of an opening (10) located on the faceable surfaces of the panel, which is sized to receive said projection upon the chamber reaching its limit mounting position and has a-retaining clip or nipper (12, 13) preventing the inadvertent exit of said projection.

4. A seat according to claim 1, **characterized in that** one of the faceable surfaces of each side has slightly projecting tabs (7) on which the other faceable surface (8) rests upon partially retracting said tabs by elastic deformation thereof.

## Patentansprüche

1. Sitz mit einer Objekthaltekammer für ein Kraftfahrzeug, dessen Sitz eine unter ihm befestigte Objekthaltekammer (2) aufweist und an seinem unteren Abschnitt eine Verkleidungsblende (1) aufweist, die in ihrem vorderen Abschnitt durch den Durchgang der Kammer unterbrochen ist, wobei die Kammer und die Blende in dem Schnittbereich zugewandte Oberflächen aufweisen, die mit Vormontageeinrichtungen versehen sind, die Führungselemente umfassen, die die relative Positionierung zwischen beiden Komponenten sicherstellen, wobei deren Führungselemente von Vorsprüngen (5) und Öffnungen oder Kanälen (9) gebildet werden, die in der Anzahl und Position übereinstimmen und an den zuwendbaren Oberflächen der Kammer und der Blende angeordnet sind, um die Einführung der Kammer durch die Blende zu führen, **dadurch gekennzeichnet, dass** die Vormontageeinrichtungen Klemmglieder umfassen, die die relative Positionierung zwischen beiden Komponenten sicherstellen, wobei deren Klemmelemente von wenigstens einem Vorsprung (6) und einer Halteaufnahme oder Öffnung (10) gebildet werden, die an den zuwendbaren Oberflächen der Kammer und der Blende in übereinstimmenden Positionen angeordnet sind, wenn die Kammer ihre endgültige Montageposition erreicht.

2. Sitz nach Anspruch 1, **dadurch gekennzeichnet, dass** die Führungsglieder aus wenigstens zwei Vorsprüngen (5) bestehen, die in unterschiedlichen Höhen angeordnet sind, zur Außenseite der zuwendbaren Flächen der Wände der Kammer vorstehen und von der gleichen Anzahl sind, wie die Öffnungen (9), die an den zuwendbaren Oberflächen der Blende angeordnet sind, deren Öffnungen in einer Richtung parallel zu der der Montage der Kammer verlaufen, auf derselben Höhe angeordnet sind, wie die Vorsprünge der Kammer, und eine ausreichende Länge zur Führung der Kammer zu der endgültigen Montageposition aufweisen.

3. Sitz nach Anspruch 1, **dadurch gekennzeichnet, dass** die Klemmglieder aus einem T-förmigen Vorsprung (6), der senkrecht von den zuwendbaren äußeren Oberflächen der Wände der Kammer vorsteht, und aus einer Öffnung (10) bestehen, die an den zuwendbaren Oberflächen der Blende angeordnet ist, welche so dimensioniert ist, dass sie den Vorsprung aufnimmt, wenn die Kammer ihre Grenzmontageposition erreicht hat, und einen Halteclip oder Klemmer (12, 13) aufweist, der einen unbeabsichtigten Austritt des Vorsprungs verhindert.

4. Sitz nach Anspruch 1, **dadurch gekennzeichnet, dass** eine der zuwendbaren Oberflächen jeder Seite leicht vorstehende Nasen (7) aufweist, an denen die andere zuwendbare Oberfläche (8) anliegt, wobei sie die Nasen durch deren elastische Deformation teilweise zurückzieht.

## Revendications

1. Siège avec compartiment porte-objet pour un véhicule automobile, dont le siège a, fixé sous lui, le compartiment porte-objet (2) et a, sur sa partie inférieure, un panneau de garnissage (1) qui est interrompu sur sa partie avant par le passage dudit compartiment, ledit compartiment et panneau ayant, dans la zone d'intersection des surfaces opposées prévues avec un moyen de pré-montage comportant des éléments de guidage garantissant le positionnement relatif entre les deux composants ; les éléments de guidage étant constitués de saillies (5) et d'ouvertures ou de canaux (9), qui coïncident en nombre et en position et qui sont situés sur les surfaces pouvant être opposées en face à face du compartiment et du panneau, afin de diriger la pénétration dudit compartiment à travers le panneau, **caractérisé en ce que** les moyens de pré-montage comportent des éléments de serrage garantissant le positionnement relatif entre les deux composants, les éléments de serrage étant constitués d'au moins une saillie (6) et d'un logement ou d'une ouverture de retenue (10) situé sur les surfaces pouvant être opposées du compartiment et du panneau, dans les positions coïncidentes lorsque la chambre atteint sa position de montage finale.

2. Siège selon la revendication 1, **caractérisé en ce que** les éléments de guidage consistent en deux saillies (5) situées à différentes hauteurs, faisant saillie vers l'extérieur des surfaces pouvant être opposées des parois du compartiment, et comportant le même nombre d'ouvertures (9) situées sur les surfaces pouvant être opposées du panneau, les ouvertures passant dans une direction parallèle à celle du montage du compartiment, étant situées à la même hauteur que les saillies dudit compartiment et étant d'une longueur suffisante pour diriger ledit compartiment jusqu'à la position de montage final.

3. Siège selon la revendication 1, **caractérisé en ce que** les éléments de serrage consistent en une saillie en forme de T (6), faisant saillie de manière perpendiculaire depuis les surfaces externes pouvant être opposées des parois du compartiment, et en une ouverture (10) située sur les surfaces pouvant être opposées du panneau, qui est dimensionné de façon à recevoir ladite saillie lorsque la chambre atteint sa position de montage limite et comporte une bride ou une pince de retenue (12, 13) empêchant la sortie accidentelle de ladite saillie.

4. Siège selon la revendication 1, **caractérisé en ce qu'**une parmi les surfaces pouvant être opposées de chaque côté comportent des pattes (7) faisant légèrement saillie sur lesquelles l'autre surface pouvant être opposée (8) repose lors du retrait partiel desdites pattes par déformation élastique de celles-ci.
